# EUROPEAN PATENT SPECIFICATION

(11) **EP 1 659 741 B1**
(45) Date of publication and mention of the grant of the patent: **17.08.2011**
(21) Application number: 05024732.9
(22) Date of filing: 11.11.2005
(51) Int. Cl.: H04L 12/413, H04L 12/56, H04L 12/28

(54) **Wireless access control station for shifting connection modes**
Station de contrôle de mobile accès pour le changement des modes de connexion
Drahtloszugangssteuerungsstation zum Wechsel der Verbindungsbetriebsverfahren

(30) Priority: 19.11.2004 JP 2004336380
(43) Date of publication of application: 24.05.2006
(73) Proprietor: CANON KABUSHIKI KAISHA, Tokyo (JP)
(72) Inventor: Imaeda, Eiji Canon K.K., Tokyo (JP)
(74) Representative: Weser, Wolfgang

(56) References cited:
- EP-A- 1 427 150
- US-A1- 2003 125 087
- US-A1- 2004 213 191
- A. KÖPSEL, J-P. EBERT, A. WOLISZ: "A Performance Comparison of Point and Distributed Coordination Function of an IEEE 802.11 WLAN in the Presence of Real-Time Requirements" PROC. OF 7TH INTL. WORKSHOP ON MOBILE MULTIMEDIA COMMUNICATIONS (MOMUC2000), 23 October 2000 (2000-10-23), pages 1-6, XP002365844 Waseda, Tokio, Japan
- MANGOLD S ET AL: "ANALYSIS OF IEEE 802.11E FOR QOS SUPPORT IN WIRELESS LANS" IEEE WIRELESS COMMUNICATIONS, IEEE SERVICE CENTER, PISCATAWAY, NJ, US, vol. 10, no. 6, December 2003 (2003-12), pages 40-50, XP001186123 ISSN: 1536-1284
- GRILO A ET AL: "Performance evaluation of IEEE 802.11E" PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, vol. 1, 15 September 2002 (2002-09-15), pages 511-517, XP010614277 ISBN: 0-7803-7589-0
- LIM L W ET AL: "A QoS scheduler for IEEE 802.11e WLANs" CONSUMER COMMUNICATIONS AND NETWORKING CONFERENCE, 2004. CCNC 2004. FIRST IEEE LAS VEGAS, NV, USA 5-8 JAN. 2004, PISCATAWAY, NJ, USA,IEEE, 5 January 2004 (2004-01-05), pages 199-204, XP010696824 ISBN: 0-7803-8145-9
- MICO F ET AL: "QoS in IEEE 802.11 wireless LAN: current research activities" ELECTRICAL AND COMPUTER ENGINEERING, 2004. CANADIAN CONFERENCE ON NIAGARA FALLS, ONT., CANADA 2-5 MAY 2004, PISCATAWAY, NJ, USA,IEEE, US, 2 May 2004 (2004-05-02), pages 447-452Vol1, XP010733481 ISBN: 0-7803-8253-6

## Description

### FIELD OF THE INVENTION

The present invention relates to a wireless access control station and wireless access control method and, for example, to a technique suitably used to optimally switch between point coordination and distributed coordination in a wireless LAN apparatus.

### BACKGROUND OF THE INVENTION

In a wireless LAN standard IEEE802.11, as an access control mechanism for sharing a single wireless channel among a plurality of wireless stations, two functions are defined, i.e., a DCF (Distributed Coordination Function) and a PCF (Point Coordination Function), using a MAC (Medium Access Control) layer function.

In accordance with the DCF (Distributed Coordination Function), each wireless station independently performs collision avoidance of a wireless channel using a CSMA/CA (Carrier Sense Multiple Access with Collision Avoidance) function, ensures the wireless channel on so-called "first-come, first-served" basis, and communicates with another wireless station.

In accordance with the PCF (Point Coordination Function), one wireless access control station totally arbitrates communication timings of the wireless stations to avoid any collision of the communication timings. In accordance with an instruction from the wireless access control station, each wireless station communicates with another wireless station.

The above-described IEEE802.11 standard defines various DCF and PCF parameters. However, a parameter implementation method is not particularly defined. The detailed implementation method is voluntarily set by each manufacturer. Accordingly, some implementation methods have been proposed.

In one example, in accordance with priority control information such as minimum bandwidth or maximum delay time attached to received data, a method of transferring data from the wireless access control station to the wireless station using the DCF or PCF has been proposed.

In another example, in accordance with an increase in traffic amount such as an increase in the average size of communication data, an increase in the remaining amount of untransmitted data in a transmission buffer, and a decrease in the free time of a transmission data frame, a method of switching the wireless data transfer scheme in which the data is transferred from the wireless access control station to the wireless station, from distributed coordination to point coordination has been proposed.

Recently, an IEEE802.11 work group TGe studies to guarantee a priority and band in accordance with the contents and application of the data, by introducing a concept of QoS (Quality of Service) to the data to be wirelessly transmitted.

More specifically, the connection channel of the data to be wirelessly transmitted serves as a traffic stream (TS). A data classification called as an access category AC is defined in accordance with the data contents for each traffic stream TS. The priority is defined for each access category AC. An "EDCA (Enhanced Distributed Channel Access)" scheme is defined as a distributed coordination function of implementing access control in accordance with the priority. Also, an "HCCA (Hybrid Coordination Function Controlled Channel Access)" scheme is studied as the point coordination function of implementing access control in accordance with the defined priority.

However, in the method of transferring data from the wireless access control station to the wireless station using the DCF or PCF, download connection from the wireless access control station to the wireless station is controlled on the basis of information attached to the data received by the wireless access control station. This method cannot be applied to upload connection from the wireless station to the wireless access control station, thus posing a problem.

In the method of switching the wireless data transfer scheme from the distributed coordination to the point coordination, when performing download connection from the wireless access control station to the wireless station, a traffic state is determined on the basis of the remaining data amount of data buffer in the wireless access control station. Therefore, this scheme cannot be applied to upload connection from the wireless station to the wireless access control station, thus posing a problem.

As described above, in the prior arts, only download connection from the coordinator which controls the PCF mode to the station is described, and any solution method pertaining to upload connection from the station to the point coordinator has not been proposed. Furthermore, in either method, only a method of changing data transfer mode from the DCF mode to the PCF mode is proposed. No solution of changing data transfer mode from the PCF mode to the DCF mode has been proposed, thus posing a problem.

XP 002365844 discloses a performance comparison of point and distributed coordination function of an IEEE 802.11 WLAN in the presence of real-time requirements.

US-A 2004213191 discloses a method for transmitting frames in WLAN, wherein the method of transmitting frames in WLAN of mentioned invention first allocates a first queue for storing frames to be transmitted in the DCF mode, and a second queue for storing frames to be transmitted in the PCF mode.

### SUMMARY OF THE INVENTION

The present invention has been made in consideration of the above problems, and has as its object to change between the distributed coordination function and the point coordination function regardless of the connection direction between the wireless access control station and the wireless station, change the function of the wireless station from the point coordination function to the distributed coordination function as needed, and provide a fair connection chance to the wireless station having only the distributed coordination function.

These objects are achieved by the wireless access control station according to claim 1, the wireless access control method according to claim 7,
the computer program according to claim 8, the computer-readable recording medium according to claim 9, and the wireless communication system according to claim 10. The other claims relate to further developments.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a block diagram showing an arrangement of an image display apparatus having an access point function according to the first embodiment of the present invention;
Fig. 2 is a view conceptually showing a state in which a wireless LAN station is connected to the access point according to the first embodiment of the present invention;
Fig. 3 is a view conceptually showing a data flow in the access point according to the first embodiment of the present invention;
Fig. 4 is a sequence chart for explaining a procedure of establishing connection between a non-QoS wireless station and the access point (QAP), and transferring data according to the first embodiment of the present invention;
Fig. 5 is a sequence chart for explaining a procedure of establishing TS connection between a QoS wireless station and the access point (QAP), and transferring data according to the first embodiment of the present invention;
Fig. 6 is a view showing a TSPEC frame arrangement according to the first embodiment of the present invention;
Fig. 7 is a table for summarizing part of TSPEC information pertaining to each channel of the wireless station according to the first embodiment of the present invention;
Fig. 8 is a flowchart showing an update procedure of the first and second threshold values α and β according to the first embodiment of the present invention;
Fig. 9 is a flowchart for explaining a procedure of connection mode shift determination according to the first embodiment of the present invention;
Fig. 10 shows an information table in the access point according to the first embodiment of the present invention;
Fig. 11 shows an information table in the access point according to the first embodiment of the present invention; and
Fig. 12 is a flowchart for explaining an update procedure of the first, second, and third threshold values α, β, and γ according to the second embodiment of the present invention.

### DETAILED DESCRIPTION OF THE PREFERRED EMBODIMENTS

Preferred embodiments of the present invention will now be described in detail in accordance with the accompanying drawings.

### (First Embodiment)

According to the first embodiment of the present invention, an image display apparatus which is compatible with a QoS function under examination in "IEEE802.11e/D8.0 February 2004" and has a wireless LAN access point function will be exemplified. The wireless LAN according to the first embodiment is obtained by adding the QoS function under examination in the IEEE802.11e draft of "IEEE802.11e/D8.0 February 2004" to an IEEE802.11g 2.4-GHz Band wireless LAN scheme. Contrary to this QoS wireless station, the conventional wireless LAN station incompatible to "IEEE802.11e/D8.0 February 2004" is called a non-QoS wireless station.

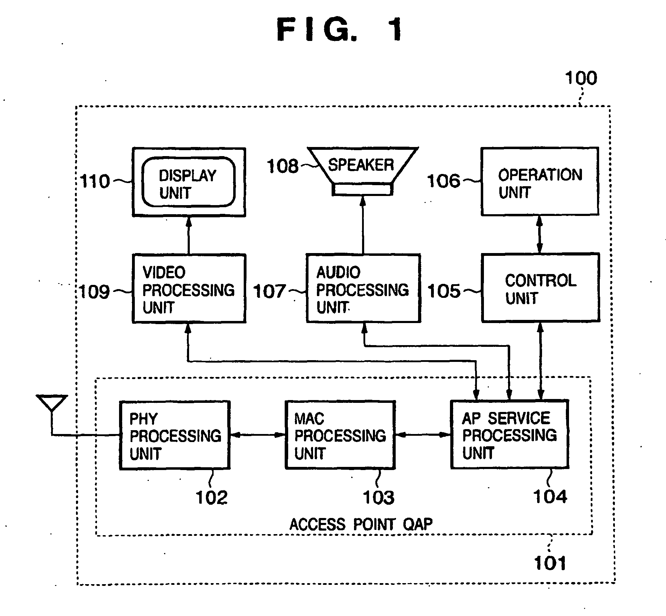

Fig. 1 is a block diagram showing an arrangement of an image display apparatus 100 having an access point function according to the first embodiment.

In Fig. 1, reference numeral 101 denotes a QoS-compatible access point (QAP) (to be referred to as an access point 101 hereinafter) according to the first embodiment. Reference numeral 102 denotes a PHY processing unit which processes a wireless LAN physical layer function; and 103, a MAC processing unit which processes a wireless LAN MAC function.

The MAC processing unit 103 has a function of processing various functions of the access point 101. The access point (to be referred to as an AP hereinafter) service processing unit 104 has a function of transferring data to the wireless station apparatus at a transmission destination address attached to the received data. A control unit 105 has a control function of processing an overall operation and an operation in response to a user's operation in the image display apparatus. An operation unit 106 has a function of inputting the user's operation, and displaying the information corresponding to the operation. Reference numeral 107 denotes an audio processing unit which converts the received audio data into an audio signal; 108, a speaker which produces sound on the basis of the audio signal from the audio processing unit 107; 109, a video processing unit which converts the received video data into a video signal; and 110, a display unit on which the image of the video signal is displayed.

The access point 101 connects to the QoS wireless station apparatus (QSTA) and the wireless station apparatus (STA) such as an external digital video camcoder apparatus, digital camera apparatus, monitoring camera apparatus, and audio apparatus having the wireless LAN function, and has an access control function and arbitration function for the wireless stations. The access point 101 also separates the received data for each data classification, and transfers the separated data to the control unit 105, audio processing unit 107, and video processing unit 109 each having a host processing function. The access point 101 also has a hub function of mediating communication between the wireless LAN stations connected to the access point 101.

The PHY processing unit 102 has a function of processing an IEEE802.11g 2.4-GHz frequency band wireless LAN physical layer function, receiving the transmission data from the MAC processing unit 103 serving as an upper protocol to transmit the data from an antenna, and receiving the data from the antenna to transmit the data to the MAC processing unit 103.

The PHY processing unit 102 also has a function of performing a beacon process, CSMA/CA process, preamble generation process, and the like. The PHY processing unit 102 also has a function of detecting any disturbing wireless wave or data collision caused by simultaneous transmission from the plurality of stations.

More specifically, in the received IEEE802.11 data, a preamble signal is set at the head of a frame. When this preamble signal cannot normally be received, and the error check of the received data is NG although the wireless wave of the frequency band same as that of the IEEE802.11 is detected, the PHY processing unit 102 determines that the received data is collided, and then notifies the MAC processing unit 103 and AP service processing unit 104 of the determination result.

The MAC processing unit 103 determines the class of received data, performs the MAC process in accordance with this data classification, and transmits the data to the AP service processing unit 104 serving as the upper protocol. Additionally, the MAC processing unit 103 performs the MAC process according to the data classification for the data received from the AP service processing unit 104, and then transmits the data to the PHY processing unit 102. Also, in order to implement a QoS service, the MAC processing unit 103 controls the priority, and processes buffering for each data class.

The AP service processing unit 104 provides a function of transferring the data received from the MAC processing unit 103 to the wireless station at the transmission destination address attached to the received data. Additionally, the data addressed to the access point 101 is transferred to the control unit 105, audio processing unit 107, and video processing unit 109 in accordance with the data classification of a TS (Traffic Stream).

When the data is addressed to another wireless station connected to the access point 101, the AP service processing unit 104 sends back the received data to the MAC processing unit 103, and transfers the data to the wireless station designated by the destination address via the PHY processing unit 102.

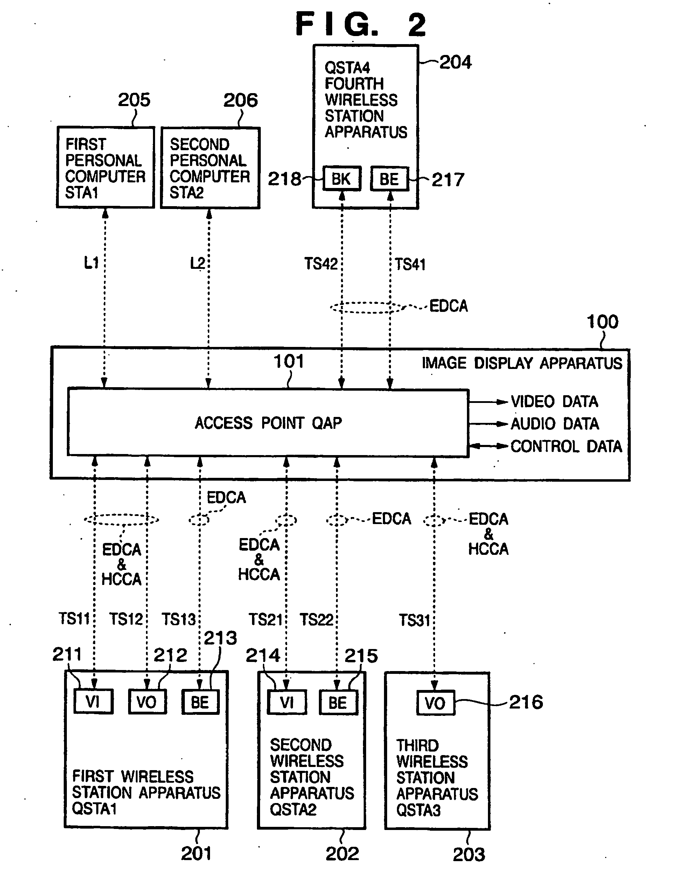

Fig. 2 is a view conceptually showing a state in which the plurality of wireless LAN stations are connected to the access point 101 according to the first embodiment. In Fig. 2, reference numeral 201 denotes a media player with a QoS wireless station function, i.e., a first wireless station apparatus (QSTA1); 202, a digital video camcoder with the QoS wireless station function, i.e., a second wireless station apparatus (QSTA2); 203, a CD player with the QoS wireless station function, i.e., a third wireless station apparatus (QSTA3); 204, a multifunctional remote controller with the QoS wireless station function, i.e., a fourth wireless station apparatus (QSTA4); 205, a first personal computer (STA1) with a non-QoS wireless station function; and 206, a second personal computer (STA2) with the non-QoS wireless station function.

The first wireless station apparatus 201 includes an internal hard disk to store and play back video and audio data. According to the first embodiment, the first wireless station apparatus 201 has one wireless LAN communication function. This wireless LAN communication function includes three access channels which are multiple wireless channels corresponding to the access categories (ACs) of the communication data.

The first access channel of the three access channels is a video channel (video data transmission channel) 211 for transmitting a video data stream. The second access channel is an audio channel (audio data transmission channel) 212 for transmitting an audio data stream. The third access channel is a control channel (aperiodical data transmission channel) 213 for transmitting the operation information of an operator and the control information of the apparatus. Each of these transmission channels 211 to 213 can independently be connected/disconnected to/from the access point 101 depending on the operation state of the first wireless station apparatus 201.

Similar to the first wireless station apparatus 201, the second wireless station apparatus 202 also has one wireless LAN communication function inside. The wireless LAN communication function has two access channels corresponding to the access categories of the communication data. Of these two access channels, one is a video channel 214 for transmitting the video data stream, and the other is a control channel 215 for transmitting the operation information of the operator and the control information of the apparatus.

The third wireless station apparatus 203 also has one wireless LAN communication function inside. The wireless LAN communication function has an audio data transmission channel 216 for transmitting the audio data stream corresponding to the access category of the communication data.

The fourth wireless station apparatus 204 also has one wireless LAN communication function inside. The wireless LAN communication function has two access channels corresponding to the access categories of the communication data.

Of these two access channels, one is an aperiodical data transmission channel 217 which transmits the data aperiodically generated in response to the operator's operation, and the other is a common control data transmission channel 218 for periodically transmitting common control information between the multifunctional remote controller and the access point 101.

The first and second personal computers 205 and 206 serving as non-QoS wireless stations do not have the above-described multiple wireless channels. Each of these personal computers has one transmission channel which operates using the DCF (Distributed Coordination Function) or PCF (Point Coordination Function):

Assume that the wireless connection channel between the access point 101 and the video channel 211 of the first wireless station apparatus 201 serves as an 11th wireless connection channel TS11. Similarly, the wireless connection channel between the access point 101 and the audio channel 212 of the first wireless station apparatus 201 serves as a 12th wireless connection channel TS12. The wireless connection channel between the access point 101 and the control channel 213 of the first wireless station apparatus 201 serves as a 13th wireless connection channel TS13.

The wireless connection channel between the access point 101 and the video channel 214 of the second wireless station apparatus 202 serves as a 21st wireless connection channel TS21. The wireless connection channel between the access point 101 and the aperiodical data transmission channel 215 of the second wireless station apparatus 202 serves as a 22nd wireless connection channel TS22. Furthermore, the wireless connection channel between the access point 101 and the audio data transmission channel 216 of the third wireless station apparatus 203 serves as a 31st wireless connection channel TS31.

The wireless connection channel between the access point 101 and the aperiodical data transmission channel 217 of the fourth wireless station apparatus 204 serves as a 41st wireless connection channel TS41. Also, the wireless connection channel between the access point 101 and the common control data transmission channel 218 of the fourth wireless station apparatus 204 serves as a 42nd wireless connection channel TS42.

The wireless connection between the first personal computer 205 and the access point 101 serves as a first wireless connection channel L1, and a wireless connection channel between the second personal computer 206 and the access point 101 serves as a second wireless connection channel L2.

The 11th to 42nd wireless connection channels TS11 to TS42, and the first and second wireless connection channels L1 and L2 are set or deleted in accordance with the presence/absence of the communication data from the station devices.

For example, when no data is played back, only 13th wireless connection channel (control channel 213) TS13 is connected to the first wireless station apparatus (media player) 201. When the operator outputs an operation instruction to play back the video data, the 11th wireless connection channel TS11 for the video channel 211 is additionally connected.

When the operator outputs an operation instruction to play back the audio data, the 12th wireless connection channel TS12 for the audio channel 212 for transmitting the audio data stream is additionally connected. Of course, when the power is "OFF", all the wireless connection channels are disconnected.

In the first embodiment, each of the video channel 211 and audio channel 212 of the first wireless station apparatus 201 corresponds to both an "EDCA mode" and "HCCA mode". The control channel 213 corresponds only to the "EDCA mode".

In the second wireless station apparatus (digital video camcoder) 202, when the power is only turned on, only the 22nd wireless connection channel TS22 for the aperiodical data transmission channel 215 is also connected. When the operator outputs the operation instruction to play back the video data, the 21st wireless connection channel TS21 for the video channel 214 is connected. The video channel 214 is compatible with both the "EDCA mode" and "HCCA mode", and the aperiodical 215 is compatible only with the "EDCA mode".

The third wireless station apparatus 203 which serves as a CD player is an apparatus for easy operation. The audio data transmission channel 216 is connected only when the operator outputs the operation instruction to play back audio data. The audio data transmission channel 216 is compatible with both the "EDCA mode" and "HCCA mode".

In order to reduce power consumption, the fourth wireless station apparatus (multifunctional remote controller) 204 is not wirelessly connected in a normal standby state. When the operator outputs an operation instruction, the 41st wireless connection channel TS41 for the control channel 217 is connected to transmit operation information data. When stopping the operation, the 41st wireless connection channel TS41 is disconnected.

The fourth wireless station apparatus 204 also has a function of periodically collecting information or notifying of it such as calendar information, indoor brightness, and operation states of other stations without user's operation. These information data are transmitted via the 42nd wireless connection channel TS42 for the common control data transmission channel 218.

The 42nd wireless connection channel TS42 is also connected as needed, and disconnected when the information data transmission ends. The aperiodical data transmission channel 217 and common control data transmission channel 218 are compatible only with the "EDCA mode".

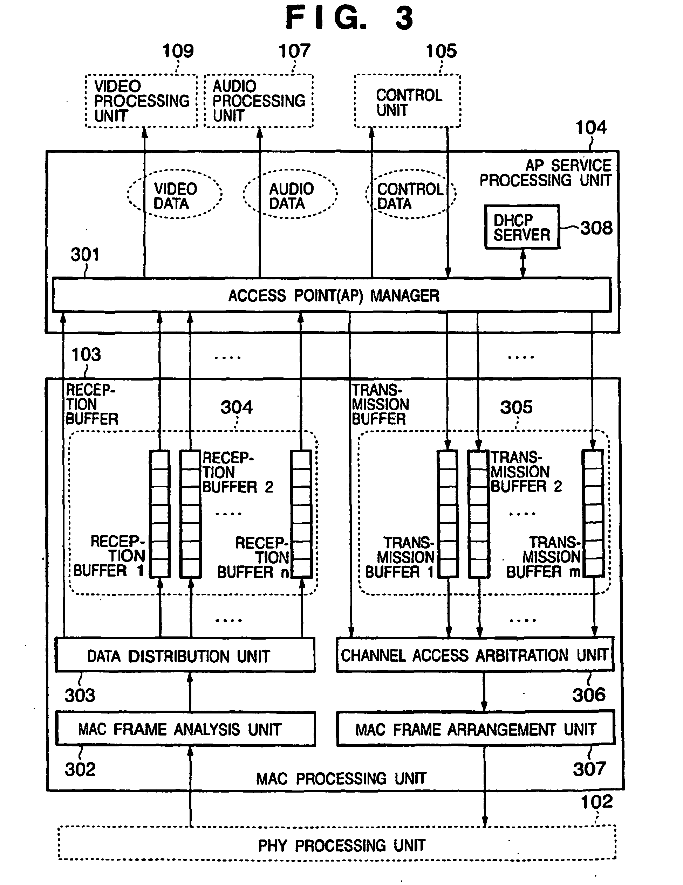

With reference to Fig. 3, a data flow in the access point 101 will be described below. The MAC processing unit 103 includes a MAC frame analysis unit 302, data distribution unit 303, reception buffer 304, transmission buffer 305, channel access arbitration unit 306, and MAC frame arrangement unit 307.

The MAC frame analysis unit 302 has a function of analyzing the MAC frame of the received data and extracting a frame body. The data distribution unit 303 has a function of separating the extracted frame body for each station in the non-Qos wireless station, or for each traffic stream TS in the QoS wireless station. The reception buffer 304 has a function of storing the frame body for each station or traffic stream TS.

The transmission buffer 305 has a function of storing the transmitted data for each station in the non-QoS wireless station, or for each traffic stream TS in the QoS wireless station. The channel access arbitration unit 306 has a function of arbitrating the data transmission in accordance with the priority. The MAC frame arrangement unit 307 has a function of adding a MAC header and the like to the transmission data to make the MAC frame.

The AP service processing unit 104 includes an AP manager 301 which supplies an access point function, and a DHCP server 308. When the received data is addressed to the image display apparatus 100, the AP manager 301 transfers the data to the control unit 105, audio processing unit 107, or video processing unit 109 serving as upper protocols, in accordance with the data classification.

When the received data is addressed to another station (each of the first to fourth wireless station apparatuses 201 to 204, and first and second personal computers 205 and 206) connected to the image display apparatus 100, the AP manager 301 also has a function of sending back the data to the wireless transmission unit, and transmitting the data to the destination station.

The DHCP server 308 has a function of supplying a free IP address when an external wireless station connected to the access point 101 requires an IP address assignment.

The data frame body for each station or for each traffic stream TS distributed by the data distribution unit 303 is independently stored in the reception buffer of the reception buffer 304. More specifically, n reception buffers are assigned, e.g., a first reception buffer 1 is assigned to the 13th wireless connection channel TS13, a second reception buffer 2 is assigned to the 11th wireless connection channel TS11, and a nth reception buffer n is assigned to the nth wireless connection channel n.

Note that Fig. 3 shows the n reception buffers, and this arrangement is only conceptual. An actual arrangement has a plurality of buffers controlled for each data unit in an MPDU (MAC Sublayer Protocol Data Units). The number of reception buffers changes as needed in order to prevent overflow, in accordance with a buffer storage state.

The control data and management data for controlling connection are directly transmitted to the AP manager 301 without mediacy of the reception buffer. Note that this reception buffer is a virtual buffer temporarily arranged in a memory space using a program. The reception buffer is generated upon connection of the traffic stream TS, and deleted upon disconnection of the traffic stream TS.

The transmission data is generated for each station or for each traffic stream TS in the AP manager 301, and transferred to the transmission buffer 305. More specifically, reception buffers are assigned, e.g., a first transmission buffer 1 is assigned to the 13th wireless connection channel TS13, a second transmission buffer 2 is assigned to the 42nd wireless connection channel TS42, and a nth reception buffer n is assigned to the first wireless connection channel L1.

Similar to the reception buffer 304, an actual arrangement has the plurality of buffers controlled for each data unit in the MPDU (MAC Sublayer Protocol Data Units). The number of transmission buffers changes as needed in order to prevent overflow, in accordance with a buffer storage state. The control data and management data for controlling connection are directly transmitted to the channel access arbitration unit 306 without mediacy of the transmission buffer 305.

Similar to the reception buffer 304, this transmission buffer 305 is also the virtual buffer temporarily arranged in the memory space using the program. The transmission buffer 305 is generated upon connection of the traffic stream TS, and deleted upon disconnection of the traffic stream TS.

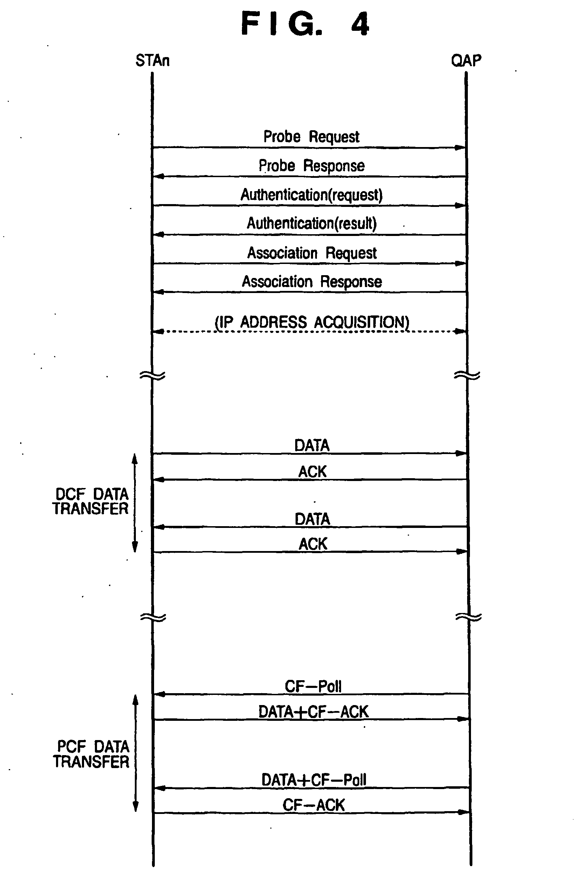

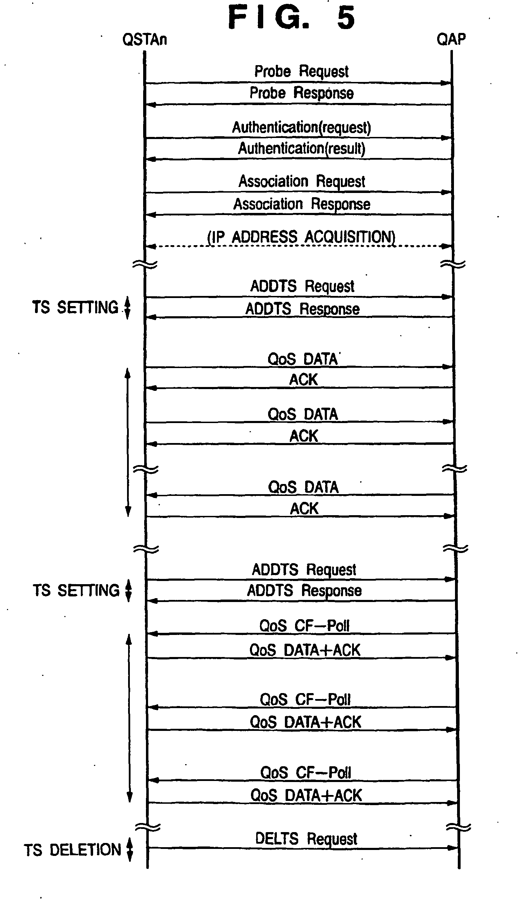

With reference to Figs. 4 and 5, the procedure of connecting each station apparatus to the access point 101 will be described according to the first embodiment of the present invention. Fig. 4 is a sequence chart schematically showing the procedure of connecting a STAn in the non-QoS wireless station to the access point 101 in the first embodiment, and transferring the data.

The information shown in the sequence chart in Fig. 4 is described in detail in "ANSI/IEEE Std 802.11, 1999 Edition", and a description thereof will be omitted. First, the wireless station apparatus STAn (to be referred to as the STAn hereinafter) transmits a Probe Request to the QoS-compatible access point (QAP) 101.

Then, a Probe Response is sent back from the QAP, the STAn confirms the presence of the QAP, and obtains information such as a BSSID. Then, when the STAn transmits an Authentication (request) as an open authentication request to the QAP, an Authentication (result) is sent back from the QAP. Accordingly, the open authentication has been done. When the STAn transmits an Association Request as a connection request, an Association Response is sent back from the QAP. If the result status succeeds, connection has been done.

After that, when the STAn has no IP address, the STAn requests the IP address to the DHCP server 308 to obtain the IP address. When the wireless station STAn has a fixed IP address, this process is not executed.

When the STAn operates in the DCF mode and receives the transmitted data, the STAn transmits the data after obtaining the right of using the wireless channel in the CSMD/CA scheme. Upon reception of the ACK response from the QAP, the STAn confirms that the data is successfully transferred. When the QAP has the transmission data, the QAP transmits data after obtaining the right of using the wireless channel in the CSMD/CA scheme. Upon reception of the ACK response from the STAn, the QAP confirms that the data is successfully transferred.

When the STAn operates in the PCF mode and obtains the transmission right from the QAP using a CF-Poll, the STAn sends back the DATA with CF-ACK, and data transfer and CF-Poll reception are confirmed. When the QAP has the transmission data, the QAP transmits the DATA with the CF-Poll, and the QAP confirms that the data is successfully transferred upon reception of the ACK response from the STAn.

Fig. 5 is a sequence chart schematically showing the procedure of connecting with the QAP and transferring the data according to the first embodiment. The information shown in the sequence chart is described in detail in "ANSI/IEEE Std 802.11, 1999 Edition", and a description thereof will be omitted.

First, the QSTAn transmits a Probe Request to the QAP. Then, a Probe Response is sent back from the QAP, the QSTAn confirms the presence of the QAP, and obtains information such as a BSSID.

Then, when the QSTAn transmits an Authentication (request) for requesting the open authentication to the QAP, an Authentication (result) as a result notification is sent back from the QAP. Accordingly, the open authentication has been done. When the QSTAn transmits an Association Request for requesting connection, an Association Response is sent back from the QAP. If the result status succeeds, connection has been done.

After that, when the QSTAn has no IP address, the QSTAn requests the IP address to the DHCP server 308 to obtain the IP address. When the wireless station QSTAn has a fixed IP address, this process is not executed. These processes are performed in both the STAn and QSTAn.

After that, in order to set a QoS stream, the QSTAn transmits an ADDTS Request in the DCF mode. The ADDTS Request is a command for requesting to set the Q-compatible data stream from the QSTAn to the QAP. The information frame of the ADDTS Request includes the information element of a TSPEC (Traffic Specification). This TSPEC includes information required to be QoS-compatible. The detailed information element of the TSPEC will be described later.

Upon reception of the ADDTS Request, the QAP analyzes the contents, and sends back the ADDTS Response including the information of connection enable QoS-compatible mode. Accordingly, the traffic stream TS has been set. Note that the traffic stream TS for first connection setting is set in the "EDCA mode". The ADDTS Request can be simultaneously transmitted upon being contained in the frame body of the Association Request. In this case, the ADDTS Response contained in the frame body of the Association Response is also sent back.

Furthermore, when the QSTAn adds the traffic stream TS in the "HCCA mode", the QSTAn transmits the ADDTS Request to the QAP. In this case, the information element of the TSPEC is notified that the traffic stream TS is compatible with the "HCCA mode".

Upon reception of the ADDTS Request, the QAP analyzes the contents, and sends back the ADDTS Response containing the information of connection enable QoS-compatible mode. Accordingly, the traffic stream TS has been set. At this time, when the QAP determines that the traffic stream TS additionally required from the QSTAn is connected in the "HCCA mode", the QAP transmits the QoS CF-Poll in a cycle to ensure the QoS band on the basis of the TSPEC information. The QSTAn is then notified of the data transmission right. Upon reception of the QoS CF-Poll, the QSTAn transmits data using a QoS DATA + ACK frame.

As described above, identification numbers TSID are respectively assigned to all the set traffic streams TS. An unnecessary traffic stream TS is deleted by transmitting to, a connection partner, a DELTS Request which designates the TSID. Note that the DELTS Request may be transmitted from the QSTAn or QAP.

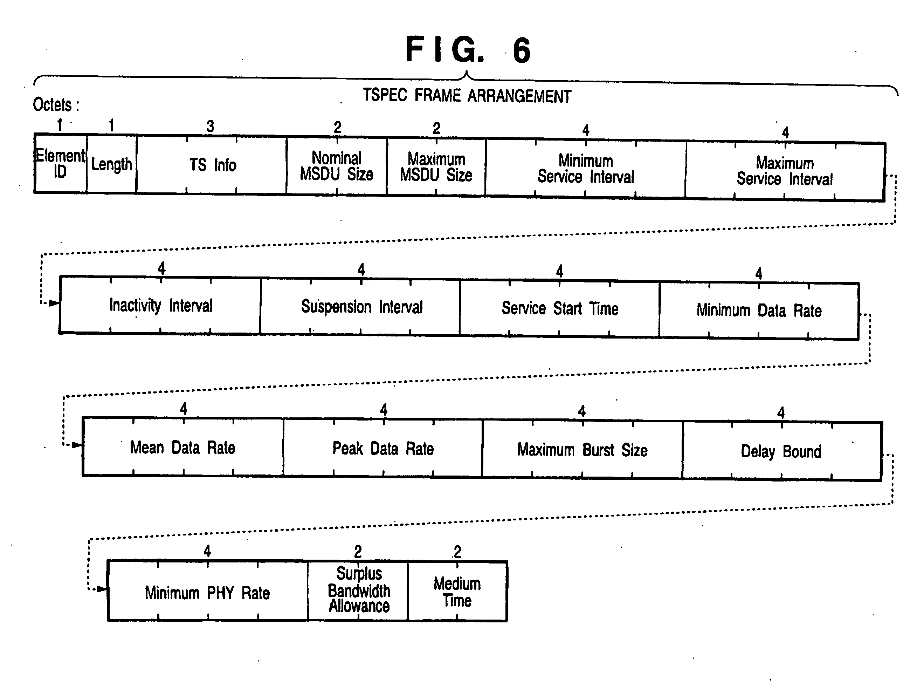

The TSPEC will be described below. The TSPEC is the information element indicating the characteristics of the station-compatible traffic stream TS. The frame arrangement is a frame having 57-octet (one octet is eight bits (= one byte)) length as shown in Fig. 6. The TSPEC information element is described in detail in the chapter 7.3.2.15 of "IEEE802.11e/D8.0 February 2004". Hence, the main part of the information element will be described below.

An Element ID is an ID number indicating the frame class. The Element ID of the TSPEC is 13. A Length is the length of this frame. Since the remaining frame length is 55 octets, the Length is a fixed value of 55.

A TS info is 3-octet information containing, e.g., the TSID as the TS identification information, an Access Policy indicating whether the station is compatible with only the "EDCA mode", only the "HCCA mode", or both the "EDCA mode" and "HCCA mode", and the user priority. See "IEEE802.11e/D8.0 February 2004" for the detailed contents of the TS Info.

A Minimum Data Rate, Mean Data Rate, and Peak Data Rate are pieces of 4-octet information respectively indicating minimum, effective, and maximum data rates of the traffic stream TS. When the QAP determines the polling schedule of the traffic stream TS, the QAP must schedule to satisfy the effective data rate within the range between the minimum and maximum data rates on the basis of these pieces of information.

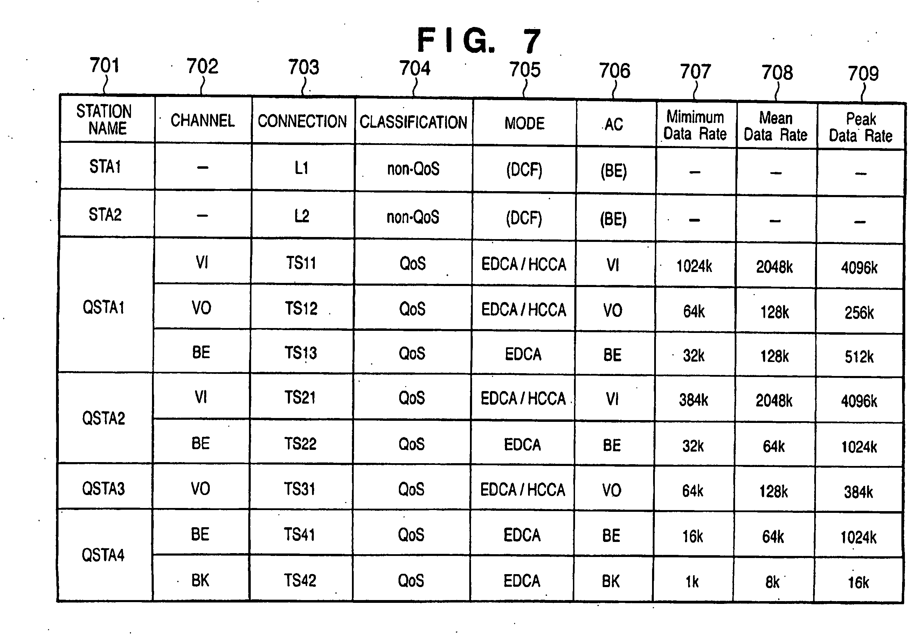

Note that some pieces of TSPEC information to be transmitted from the wireless station via the channel are summarized in Fig. 7. In Fig. 7, the first and second personal computers 205 and 206 are non-QoS stations, but the QAP processes the non-QoS station as the station whose access category is BE.

As for the video channel 211 of the first wireless station apparatus 201, the access category (AC) is a video stream, the connection mode 705 can be the "EDCA mode" and "HCCA mode", and the effective data rate 708 is 2,048 kbps.

As for the audio channel 212 of the first wireless station apparatus 201, the AC 706 is an audio data stream, the connection mode 705 can be the "EDCA mode" and "HCCA mode", and the effective data rate 708 is 128 kbps. As for the control channel 213 of the first wireless station apparatus 201, the AC 706 is BE, the connection mode 705 can be only the "EDCA mode", and the effective data rate 708 is 128 kbps.

Similarly, as for the video channel 214 of the second wireless station apparatus 202, the AC 706 is a video stream, the connection mode 705 can be the "EDCA mode" and "HCCA mode", and the effective data rate 708 is 2,048 kbps. As for the aperiodical data transmission channel 215 of the second wireless station apparatus 202, the AC 706 is a BE stream, the connection mode 705 can be only the "EDCA mode", and the effective data rate 708 is 64 kbps.

As for the audio data transmission channel 216 of the third wireless station apparatus 203, the AC 706 is an audio data stream, the connection mode 705 can be the "EDCA mode" and "HCCA mode", and the effective data rate 708 is 128 kbps.

As for the aperiodical data transmission channel 217 of the fourth wireless station apparatus 204, the AC 706 is a BE stream, the connection mode 705 can be only the "EDCA mode", and the effective data rate 708 is 64 kbps. As for the common control data transmission channel 218 of the fourth wireless station apparatus 204, the AC 706 is a BK stream, the connection mode 705 can be the "EDCA mode", and the effective data rate 708 is 8 kbps.

The connection mode switching scheme of the traffic stream in the QAP will be described below according to the first embodiment. According to the first embodiment, when the links from the first and second personal computers 205 and 206 serving as the wireless stations are connected to the QAP in the procedure shown in Fig. 4, the AP manager 301 generates an information table about each wireless connection. When the first to fourth wireless station apparatuses 201 to 204 each perform traffic stream connection of the channel in the procedure shown in Fig. 5, the AP manager 301 generates the information table about each wireless communication.

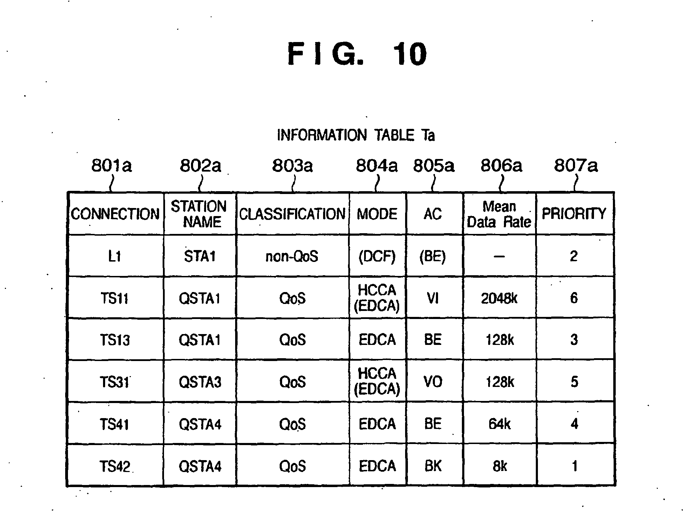

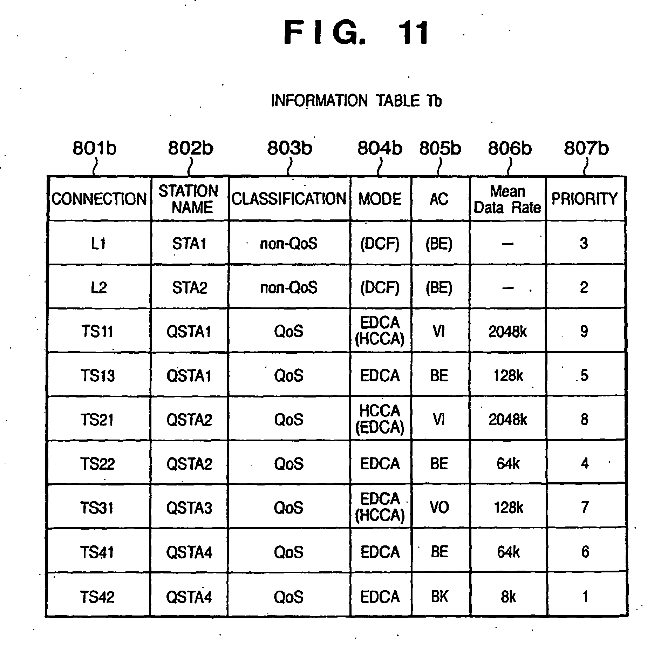

On the basis of the communication mode, AC, and Mean Data Rate of each wireless connection, the priority of each wireless connection is determined, and the determined priority is added to the corresponding information table. The priority order is "HCCA mode" > "EDCA mode", and VI > VO > BE > BK. It is determined that the larger the Mean Data Rate of the communication rate becomes, the higher priority is defined, and the priorities of the respective wireless connections are determined by weighting these values. The generated information tables are shown in Figs. 10 and 11.

According to the first embodiment, the AP manager 301 of the access point (QAP) 101 has three threshold values "α, β, and γ". The first threshold value α is used to determine whether the connection count of the channel whose access category is neither video nor audio data is small. An initial value at the start of the access point 101 is an integral value which is set when shipping in advance.

The second threshold value P is used to determine whether the connection count of the channel whose access category is neither video nor audio data is large. An initial value at the start of the access point 101 which is an integral value which is set when shipping in advance is equal to or larger than the first threshold value α.

The third threshold value γ is used to determine whether the number of collisions in the wireless channel is large. An initial value at the start of the access point 101 is an integral value which is set when shipping in advance.

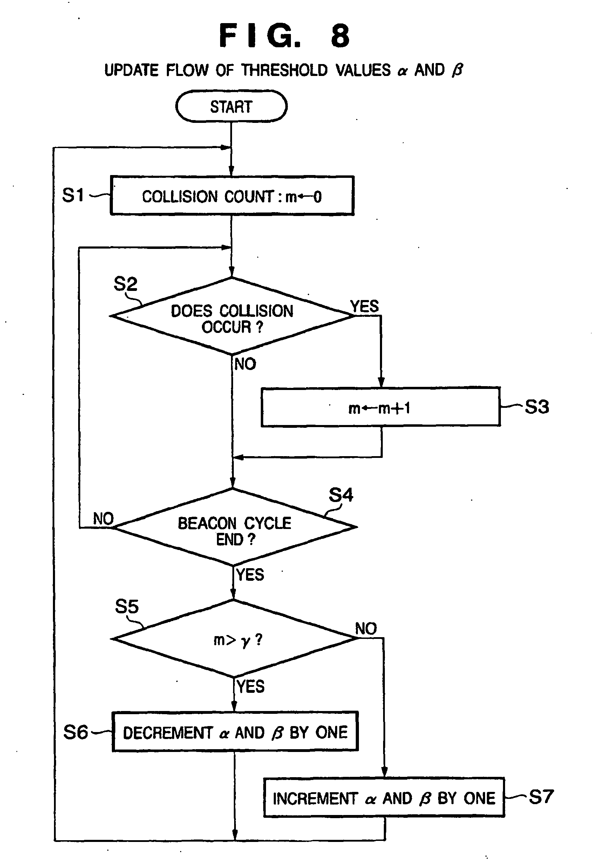

These three threshold values are repeatedly updated in the procedure shown in Fig. 8 in the beacon cycle of the access point 101. At the start of the beacon cycle, a process is started in the procedure shown in Fig. 8. First, in step S1, a variable m indicating a collision count of the wireless data is initialized to "0".

The flow advances to step S2, and it is determined whether the PHY processing unit 102 detects the collision of the received data. In accordance with the determination result, if the collision is detected, the flow advances to step S3, and the variable m is incremented by "1". In accordance with the determination result in step S2, if the received data collision is not detected, the flow advances to step S4, and it is determined whether the beacon cycle ends. In accordance with the determination result in step S4, if the beacon cycle does not end, the flow returns to step S2, and the above-described process is repeated.

In accordance with the determination result in step S4, if it is determined that one beacon cycle ends, the flow advances to step S5, and the collision count m is compared with the third threshold value γ. In accordance with the comparison result, if the collision count m is larger than the third threshold value γ, the flow advances to step S6, and each of the first and second threshold values α and β is decremented by one.

In accordance with the determination result in step S5, if the collision count m is equal to or smaller than the third threshold value γ, the flow advances to step S7, and each of the first and second threshold values α and β is incremented by one. When the processes in steps S6 and S7 end, the flow returns to the process at the start of the beacon cycle in step S1

That is, if the received data collision count is larger than the third threshold value γ, the parameters α and β for determining a channel count are decremented. Alternatively, if the received data collision count is smaller than the third threshold value γ, the parameters α and β for determining a channel count are incremented. The process is repeated in the beacon cycle. Note that this incremental process is performed in parallel to other processes. When the channel is disconnected, the process ends.

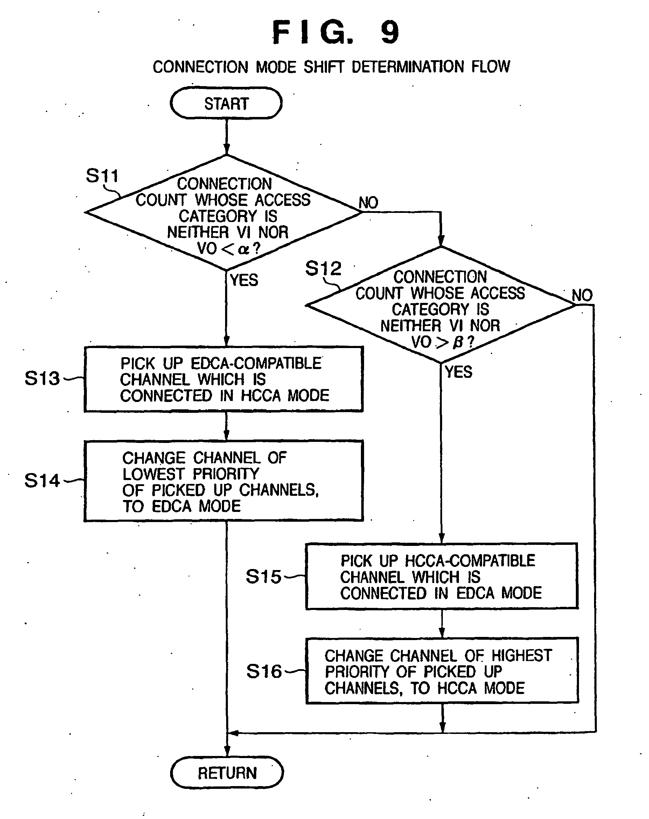

According to the first embodiment, in a cycle predetermined by an internal timer, the AP manager 301 evaluates the connected wireless channel count, and determines the shift process between the "HCCA mode" and the "EDCA mode", in the flow shown in Fig. 9.

That is, when this process is started by an internal timer (not shown), in step S11, the connection count of the channel whose access category is neither video nor audio data is checked from the table in the AP manager 301 in which station information is recorded as in Fig. 7. It is determined whether the channel count is smaller than the first threshold value α.

In accordance with the determination result, if the connection count of the channel whose access category is neither video nor audio data is smaller than the first threshold value α, the flow advances to step S13. After that, an "EDCA mode"-compatible channel which is connected in the "HCCA mode" is picked up from the table.

The flow then advances to step S14, and the mode of the channel of the lowest priority of the channels picked up in step S13 is shifted from the "HCCA mode" to the "EDCA mode". The priority of the channel whose access category is video data is highest, and the priority decreases in the order of the channels whose access categories are VO, BE, and BK.

When a plurality of channels have the same access category, it is determined that the larger the Mean Data Rate becomes, the higher the priority is defined. When the channel is switched from the "HCCA mode" to the "EDCA mode", the access point 101 side transmits a DEL TS Request to the QSTA side to disconnect the "HCCA mode", and transmits the ADDTS Request to the QSTA side to set the "EDCA mode".

In accordance with the determination result in step S11, if the connection count of the channel whose access category is neither video nor audio data is larger than or equal to the first threshold value a, the flow advances to step S12. It is determined whether the connection count of the channel whose access category is neither video nor audio data is larger than the second threshold value β.

In accordance with the determination result in step S12, if the connection count of the channel whose access category is neither video nor audio data is larger than the second threshold value β, the flow advance to step S15. An "HCCA mode"-compatible channel connected in the "EDCA mode" is picked up from the table.

After that, the flow advances to step S16, and the channel of the highest priority of the picked-up channels is shifted from the "EDCA mode" to the "HCCA mode". In accordance with the determination result in step S12, the flow returns to a main routine when the connection count of the channel whose access category is neither video nor audio data is equal to or smaller than the second threshold value β.

The shift determination process between "HCCA mode" and "EDCA mode" is a shift process of one channel for each process. However, since the process is repeatedly performed using the timer, the processes converge to a predetermined steady state.

The detailed process is described below. In the access point 101 according to the first embodiment, the threshold values are set at α = 5, β = 5, and γ = 5. When the power is turned on, the first wireless connection channel L1 shown in Fig. 2 is connected. Each of the 11th wireless connection channel TS11 and the 31st wireless connection channel TS31 is compatible with both the "HCCA mode" and "EDCA mode". The 11th wireless connection channel TS11 and the 31st wireless connection channel TS31 are currently connected in the "HCCA mode". The 13th wireless connection channel TS13 and the 41st and 42nd wireless connection channels TS41 and TS42 can be compatible with the "EDCA" mode, and are connected and set in the "EDCA mode".

In this case, as shown in Fig. 10, in the AP manager 301 of the access point 101, an information table Ta is generated which contains the information of the Association Request of the first wireless connection channel L1 and information obtained from the TSPEC of the 11th wireless connection channel TS11, 13th wireless connection channel TS13, 31st wireless connection channel TS31, 41st wireless connection channel, and 42nd wireless connection channel TS42.

In accordance with the contents of the mode (804a), AC (805a), and Mean Data Rate (806a), the priority order (807a) of channels is set to (TS11 > TS31 > TS41 > TS13 > L1 > TS42). In this case, the wireless data collision count for each beacon interval is equal to or smaller than 5. The threshold value shown in Fig. 8 is not updated.

In this state, when the connection mode shift determination flow shown in Fig. 9 is performed, channels whose access category is neither video nor audio data include four channels, i.e., the first wireless connection channel L1, 13th wireless connection channel TS13, 41st wireless connection channel, and 42nd wireless connection channel TS42. That is, the channel count is smaller than the first threshold value α (= 5).

Hence, the flow advances to step S13, and an "EDCA mode"-compatible channel is picked up from the stations connected in the "HCCA mode". The flow then advances to step S14, and the channel (31st wireless connection channel TS31) of the lowest priority of the channels picked up in step S13 is shifted to the "EDCA mode" to update the table information.

Assume that the connection mode shift determination flow is performed again using the timer. Since the connection count of the channel whose access category is neither video nor audio data is smaller than the threshold value α (= 5), the 11th wireless connection channel TS11 is also shifted from the "HCCA mode" to the "EDCA mode" to update the table information. Since the station in the "HCCA mode" is disconnected in this process, steps S13 and S14 are performed in the subsequent connection mode shift determination flow. However, the connection state of the wireless station is kept unchanged.

Next, assume that the second wireless connection channel L2 of the second personal computer 206, the 21st wireless connection channel TS21 of the second wireless station apparatus 202, and the 22nd wireless connection channel TS22 are additionally connected.

The 21st wireless connection channel TS21 is compatible with both the "HCCA mode" and "EDCA mode". The 21st wireless connection channel TS21 is currently connected in the "HCCA mode". The 22nd wireless connection channel TS22 can be compatible with the "EDCA" mode, and is connected and set in the "EDCA mode".

In this case, as shown in Fig. 11, in the AP manager 301 of the access point 101, an information table Tb is generated which contains the information of the "Association Request" of the first wireless connection channel L1 and the second wireless connection channel L2, and information obtained from the TSPEC of the 11th wireless connection channel TS11, 13th wireless connection channel TS13, 21st wireless connection channel TS21, 22nd wireless connection channel TS22, 31st wireless connection channel TS31, 41st wireless connection channel TS41, and 42nd wireless connection channel TS42.

In accordance with the contents of the mode (804b), AC (805b), and Mean Data Rate (806b), the priority order (807b) of channels is set to (TS11 > TS21 > TS31 > TS41 > TS13 > TS22 > L1 > L2 > TS42).

In this case, the wireless data collision count for each beacon interval is also equal to or smaller than 5. The threshold value shown in Fig. 8 is not updated. In this state, when the connection mode shift determination flow shown in Fig. 9 is performed again, the channels whose access category is neither video nor audio data include six channels, i.e., first wireless connection channel L1, second wireless connection channel L2, 13th wireless connection channel TS13, 22nd wireless connection channel TS22, 41st wireless connection channel TS41, and 42nd wireless connection channel TS42.

That is, the channel count is larger than the first threshold value α (= 5), and larger than the second threshold value β (= 5). Hence, the flow advances to step S15, and an "HCCA mode"-compatible channel is picked up from the stations connected in the "EDCA mode". The flow then advances to step S16, and the channel (11th wireless connection channel TS11) of the highest priority of the channels picked up in step S15 is shifted to the "HCCA mode" to update the table information.

Assume that the connection mode shift determination flow is performed again using the timer again. Since the connection count of the channel whose access category is neither video nor audio data is larger than the threshold value β (= 5), the 31st wireless connection channel TS31 is also shifted from the "EDCA mode" to the "HCCA mode" to update the table information. Since the "HCCA mode"-compatible station connected in the "EDCA mode" is disconnected in this process, steps S15 and S16 are performed in the subsequent connection mode shift determination flow. However, the connection state of the wireless station is kept unchanged.

In this steady state, another wireless station incompatible with the wireless LAN and a noise source generate wireless noise. When the collision count for each beacon interval is equal to or larger than 5, each of the first and second threshold values α and β is decremented by one in the threshold value update flow shown in Fig. 8. A channel count determination reference value in steps S11 and S12 of the connection mode shift determination flow is then decreased. The process is repeated again until the processes reach the steady state.

### (Second Embodiment)

In the first embodiment, the third threshold value γ is a fixed value. However, the third threshold value γ may be a variable in accordance with a factor such as the number of connected stations. In the second embodiment, the third threshold value γ is a variable.

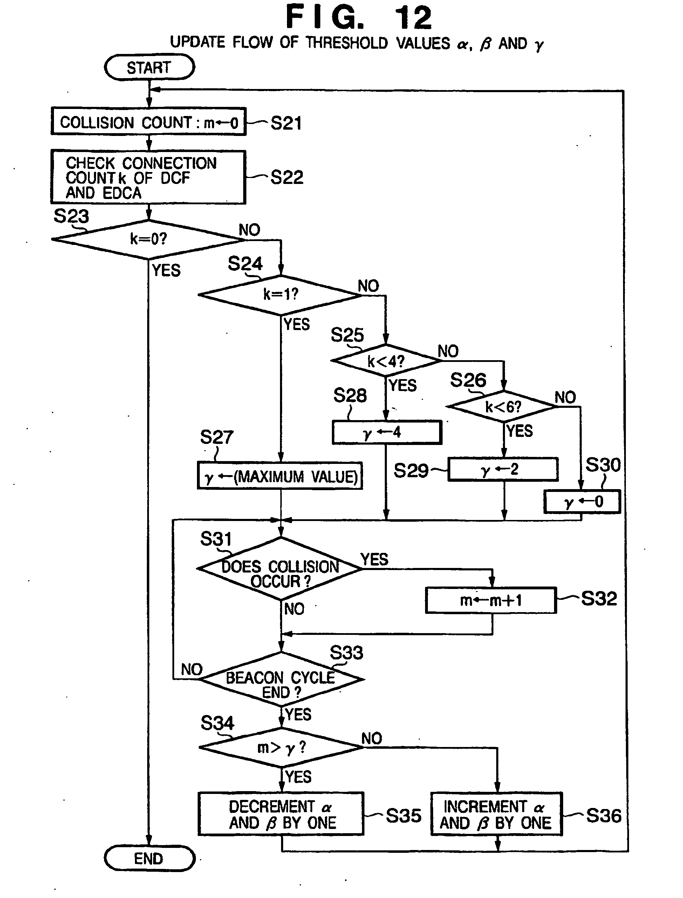

Fig. 12 is a flowchart showing an example of the second embodiment, and an update procedure of first, second, and third threshold values α, β, and γ when the third threshold value γ becomes a variable. In the second embodiment, the update flow of the first, second, and third threshold values α, β, and γ is also updated for each beacon cycle as the process shown in Fig. 8.

In Fig. 12, step S21 is the same as step S1, and steps S31 to S36 are the same as steps S2 to S7, so a description thereof will be omitted. When the first and second threshold values α and β are updated in steps S35 and S36 after this process starts or the beacon cycle ends, a collision count parameter "m" is initialized to "0" in step S21.

The flow then advances to step S22, and an AP manager 301 checks a "connection count k" in the "DCF mode" or "EDCA mode" from the above-described information table.

When the check ends in step S22, the flow then advances to step S23 to determine whether the "connection count k" is "0". In accordance with the determination result, there is no connected station when the "connection count k" is "0". Accordingly, the process ends.

In accordance with the determination in step S23, if the "connection count" is not "0", the flow advances to steps S24 to S26. After steps S24 to S26, the flow advances to steps S27 to S30 to set the third threshold value γ on the basis of the "connection count k".

That is, in step S24, it is determined whether the "connection count k" is "1". In accordance with the determination result, if the "connection count k" is "1", the flow advances to step S27 to set the third threshold value γ at maximum.

In the second embodiment, the maximum threshold value is "FFFFF-FFFh" when using a 32-bit CPU, and "FFFFh" when using a 16-bit CPU. The maximum threshold value can be obtained by executing a "0 - 1" calculation, regardless of the bit width of the CPU.

In accordance with the determination result in step S24, if the "connection count k" is not "1", the flow advances to step S25 to determine whether the "connection count k" is smaller than "4". In accordance with the determination result in step S25, if the "connection count k" is equal to or smaller than "4", the flow advances to step S28 to set the third threshold value γ at "4".

In accordance with the determination result in step S25, if the "connection count k" is equal to or larger than "4", the flow advances to step S26 to determine whether the "connection count k" is equal to or smaller than "6". In accordance with the determination result in step S26, if the "connection count k" is smaller than "6", the flow advances to step S29 to set the third threshold value γ is set at "2". Alternatively, if the "connection count k" is equal to or larger than "6", the flow advances to step S30 to set the third threshold value at "0". As described above, when the third threshold value γ is set on the basis of the "connection count k", the collision count determination reference value changes in accordance with the "connection count k".

When the third threshold value γ is set at maximum, the collision count m is always equal to or smaller than the third threshold value in the determination process in step S34. Hence, the flow always advances to step S36. That is, it can be determined that the collision detected when the "connection count k" is "1" is not the collision with the IEEE802.11 wireless LAN station, but is caused by a jammer such as a microwave oven, Blue-tooth, and CB wireless connection. Hence, it is determined that the collision count does not decrease even in the "HCCA mode".

Therefore, the first and second threshold values α and β each are sequentially incremented by one, and it is determined that the connection count of the channel whose access category is neither video nor audio data is smaller than the first threshold value α in step S11. Hence, in steps S13 and S14, all the stations capable of shifting to the "EDCA mode" shift from the "HCCA mode" to "EDCA mode".

When the third threshold value γ is set at "0", the process in step S35 is executed if the collision count is equal to or larger than "1" in step S34. If no collision is detected, the flow advances to step S36.

Therefore, if the collision count is at least "1" when the connection count is equal to or larger than "6", the first and second threshold values α and β are sequentially decremented by one. Hence, steps S15 and S16 are readily performed, and the station capable of connecting in the "HCCA mode" shifts to the "HCCA mode".

When the third threshold value γ is set at "4", the process in step S35 is performed if the collision count is equal to or larger than "5" in step S34. Alternatively, if the collision count is equal to or smaller than "5", the process in step S36 is performed.

When the third threshold value γ is set at "2", the process in step S35 is performed if the collision count is equal to or larger than "3" in step S34. Alternatively, if the collision count is equal to or smaller than "3", step S36 is performed.

Therefore, when the third threshold value γ is small, i.e., when the "connection count k" is large, step S35 is performed in a small number of collisions. As a result, an expectation to perform the processes in steps S15 and S16 is enlarged, and the station readily shifts from the "EDCA mode" to the "HCCA mode". Alternatively, when the third threshold value γ is large, i.e., when the "connection count k" is small, step 36 is performed until many collisions occur. As a result, an expectation to perform processes in steps S13 and S14 is enlarged, and the station readily shifts from the "HCCA mode" to the "EDCA mode".

### (Third Embodiment)

In the first embodiment, the priority in the information table is determined from the mode, AC, and Mean Data Rate. However, the priority may be determined by using a parameter such as a Minimum Data Rate obtained from a TSPEC, or a Peak Data Rate. The priority may also be determined in accordance with remaining information in the TSPEC.

Furthermore, in a first wireless station apparatus 201 or second wireless station apparatus 202 having a plurality of wireless channels, prior to connection of a video channel and audio data transmission channel, an aperiodical data transmission channel may be connected. The application of the access point 101 may receive station control information similar to a TSPEC information element from the application of the second wireless station apparatus 202 via the aperiodical data transmission channel.

In the first embodiment, the AP manager 301 evaluates the connection count of the wireless channels in the flow shown in Fig. 9, in a cycle predetermined by an internal timer, and performs shift determination between the "HCCA mode" and "EDCA mode". However, when the connection count of the channels connected to the access point 101 changes, the connection mode shift determination process can be performed in the flow shown in Fig. 9.

In the second embodiment, when the "connection count k" is "2" or "3", the third threshold value γ is set at "4". When the "connection count k" is "4" or "5", the third threshold value γ is set at "2" This value can change in accordance with user's taste unless the process order is changed.

According to the present invention, the station can be changed between the distributed coordination function and point coordination function regardless of the connection direction of the wireless access control station and the wireless station. Hence, for example, the wireless station having only the distributed coordination function can obtain a connection chance, by shifting the wireless station from the point coordination function to the distributed coordination function as needed.

### <Other Embodiments>

Note that the present invention can be applied to an apparatus comprising a single device or to system constituted by a plurality of devices.

Furthermore, the invention can be implemented by supplying a software program, which implements the functions of the foregoing embodiments, directly or indirectly to a system or apparatus, reading the supplied program code with a computer of the system or apparatus, and then executing the program code. In this case, so long as the system or apparatus has the functions of the program, the mode of implementation need not rely upon a program.

Accordingly, since the functions of the present invention are implemented by computer, the program code installed in the computer also implements the present invention. In other words, the claims of the present invention also cover a computer program for the purpose of implementing the functions of the present invention.

In this case, so long as the system or apparatus has the functions of the program, the program may be executed in any form, such as an object code, a program executed by an interpreter, or script data supplied to an operating system.

Examples of storage media that can be used for supplying the program are a floppy disk, a hard disk, an optical disk, a magneto-optical disk, a CD-ROM, a CD-R, a CD-RW, a magnetic tape, a non-volatile type memory card, a ROM, and a DVD (DVD-ROM, DVD-R or DVD-RW).

As for the method of supplying the program, a client computer can be connected to a website on the Internet using a browser of the client computer, and the computer program of the present invention or an automatically-installable compressed file of the program can be downloaded to a recording medium such as a hard disk. Further, the program of the present invention can be supplied by dividing the program code constituting the program into a plurality of files and downloading the files from different websites. In other words, a WWW (World Wide Web) server that downloads, to multiple users, the program files that implement the functions of the present invention by computer is also covered by the claims of the present invention.

It is also possible to encrypt and store the program of the present invention on a storage medium such as a CD-ROM, distribute the storage medium to users, allow users who meet certain requirements to download decryption key information from a website via the Internet, and allow these users to decrypt the encrypted program by using the key information, whereby the program is installed in the user computer.

Besides the cases where the aforementioned functions according to the embodiments are implemented by executing the read program by computer, an operating system or the like running on the computer may perform all or a part of the actual processing so that the functions of the foregoing embodiments can be implemented by this processing.

Furthermore, after the program read from the storage medium is written to a function expansion board inserted into the computer or to a memory provided in a function expansion unit connected to the computer, a CPU or the like mounted on the function expansion board or function expansion unit performs all or a part of the actual processing so that the functions of the foregoing embodiments can be implemented by this processing.

As many apparently widely different embodiments of the present invention can be made without departing from the scope thereof, it is to be understood that the invention is not limited to the specific embodiments thereof except as defined in the appended claims.

## Claims

1. A wireless access control station comprising:
a manager (301) adapted to manage access category information (805) as defined in accordance with data content of each wireless connection channel, and access scheme information of each wireless connection channel, wherein the access scheme information indicates whether a wireless connection channel can be established using a contention free access scheme and/or a contention access scheme;
a first determination unit adapted to determine (S11, S12) a wireless connection count, which is the number of wireless connection channels using the contention access scheme and having such an access category whose priority is lower than a predetermined priority;
a second determination unit adapted to determine a priority order of the wireless connection channel in accordance with the access category information and the access scheme information managed by said manager;
a selection unit adapted to select (S13, S14, S15, S16) a wireless connection channel whose access scheme is to be changed, among a plurality of wireless connection channels having an access category whose priority order is higher than the predetermined priority order and being capable of using either one of the contention free access scheme and the contention access scheme; and
a change unit (301) adapted to change the access scheme of the wireless connection channel selected by said selection unit from the
contention free access scheme to the contention access scheme, or from the contention access scheme to the contention free access scheme;
wherein said selection unit is further adapted to select a wireless connection channel whose priority order is the lowest, among the plurality of wireless connection channels using the contention free access scheme, when the wireless connection count of the predetermined access category is not more than a predetermined first threshold value, and to select a wireless connection channel whose priority order is the highest, among the plurality of wireless connection channels using the contention access scheme, when the wireless connection count of the predetermined access category is not less than a predetermined second threshold value.

2. The wireless access control station according to claim 1, wherein
said manager is adapted to further manage bandwidth information indicating communication bandwidth required for the wireless connection, and
said second determination unit is further adapted to determine the priority order of the wireless connection channel in accordance with the access category information, the access scheme information, and the bandwidth information.

3. The wireless access control station according to claim 1, further comprising
a collision detection unit adapted to detect (S2) that communication of the wireless connection channel is disturbed, and
a detection counter adapted to count (S3) the number of disturbed Communications detected by said collision detection unit,
wherein the first threshold value is incremented or decremented by one in accordance with the number of disturbed communications
counted by said detection counter.

4. The wireless access control station according to claim 1, further comprising
a collision detection unit adapted to detect (S2) that communication of the wireless connection channel is disturbed, and
a detection counter adapted to count (S3) the number of disturbed communications detected by said collision detection unit,
wherein the second threshold value is incremented or decremented by one in accordance with the number of disturbed communications counted by said detection counter.

5. The wireless access control station according to claim 1, wherein said first determination unit is adapted to periodically repeat determination of the wireless connection count.

6. The wireless access control station according to claim 1, wherein said first determination unit is adapted to perform, in accordance with the change in the wireless connection count of the wireless connection channel, determination of the wireless connection count.

7. A wireless access control method, comprising:
a managing step of managing an access category information (805) as defined in accordance with data content of each wireless connection channel, and access scheme information (804) of each wireless connection channel, wherein the access scheme information indicates whether a wireless connection channel can be established using a contention free access scheme and/or a contention access scheme;
a first determination step of determining (S11, S12) a wireless connection count, which is the number of wireless connection channels using the contention access scheme, and having such an access category whose priority order is lower than a predetermined priority order;
a second determination step of determining a priority order of the wireless connection channel in accordance with the access category information and the access scheme information managed in said managing step;
a selection step of selecting (S13, S14, S15, S16) a wireless connection channel whose access scheme is to be changed, among a plurality of wireless connection channels having an access category whose priority order is higher than the predetermined priority order and using either one of the contention free access scheme and the contention access scheme; and
a switching step (S14, S16) of switching the access scheme of the wireless connection channel selected in said selection step from the contention free access scheme to the contention access scheme, or from the contention access scheme to the contention free access;
wherein said selection step selects a wireless connection channel whose priority order is the lowest, among the plurality of wireless connection channels using the contention free access scheme, when the wireless connection count of the predetermined access category is not more than a predetermined first threshold value, and selects a wireless connection channel whose priority order is the highest, among the plurality of wireless connection channels using the contention access scheme, when the wireless connection count of the predetermined access category is not less than a predetermined second threshold value.

8. A computer program suitable for causing a computer to execute the steps of the control method according to claim 7.

9. A computer-readable recording medium recording a computer program defined in claim 8.

10. A wireless communication system comprising a wireless access control station defined in any one of claims 1 to 6.

## Patentansprüche

1. Drahtlos-Zugangssteuerstation, umfassend:
einen Verwalter (301), ausgebildet zum Verwalten von Zugangskategorieinformation (805), die gemäß einem Dateninhalt jedes Drahtlos-Verbindungskanals definiert ist, und von Zugangsschemainformation jedes Drahtlos-Verbindungskanals, wobei die Zugangsschemainformation angibt, ob ein Drahtlos-Verbindungskanal unter Verwendung eines inhaltsfreien Zugangsschemas und/oder eines Inhalt-Zugangsschemas eingerichtet werden kann;
eine erste Bestimmungseinheit, ausgebildet zum Bestimmen (S11, S12) eines Drahtlos-Verbindungszählers, bei dem es sich um die Anzahl von Drahtlos-Verbindungskanälen handelt, die das Inhalt-Zugangsschema benutzen und eine derartige Zugangskategorie aufweisen, dass ihre Priorität geringer als eine vorbestimmte Priorität ist;
eine zweite Bestimmungseinheit, ausgebildet zum Bestimmen einer Prioritätsreihenfolge des Drahtlos-Verbindungskanals gemäß der Zugangskategorieinformation und der Zugangsschemainformation, die von dem Verwalter verwaltet wird;
eine Auswahleinheit, ausgebildet zum Auswählen (S13, S14, S15, S16) eines Drahtlos-Verbindungskanals, dessen Zugangsschema zu ändern ist, aus mehreren Drahtlos-Verbindungskanälen mit einer Zugangskategorie, deren Prioritätsreihenfolge höher ist als die vorbestimmte Prioritätsreihenfolge, und in der Lage ist, das inhaltsfreie Zugangsschema oder das Inhalt-Zugangsschema zu verwenden; und
eine Änderungseinheit (301), ausgebildet zum Ändern des Zugangsschemas des von der Auswahleinheit ausgewählten Drahtlos-Verbindungskanals vom inhaltsfreien Zugangsschema ins Inhalt-Zugangsschema, oder vom Inhalt-Zugangsschema ins inhaltsfreie Zugangsschema;
wobei die Auswahleinheit außerdem dazu ausgebildet ist, einen Drahtlos-Verbindungskanal mit der geringsten Prioritätsreihenfolge unter den mehreren, das inhaltsfreie Zugangsschema verwendenden Drahtlos-Verbindungskanälen auszuwählen, wenn der Drahtlos-Verbindungszählwert der vorbestimmten Zugangskategorie nicht größer ist als ein vorbestimmter erster Schwellenwert, und einen Drahtlos-Verbindungskanal mit der höchsten Prioritätsreihenfolge unter den mehreren, das Inhalt-Zugangsschema verwendenden Drahtlos-Verbindungskanälen auszuwählen, wenn der Drahtlos-Verbindungszählwert der vorbestimmten Zugangskategorie nicht kleiner ist als ein vorbestimmter zweiter Schwellenwert.

2. Drahtlos-Zugangssteuerstation nach Anspruch 1, wobei
der Verwalter dazu ausgebildet ist, außerdem Bandbreiteninformation zu verwalten, welche eine für die Drahtlosverbindung erforderliche Kommunikationsbandbreite angibt, und
die zweite Bestimmungseinheit weiterhin dazu ausgebildet ist, die Prioritätsreihenfolge des Drahtlos-Verbindungskanals gemäß der Zugangskategorieinformation, der Zugangsschemainformation und der Bandbreiteninformation zu bestimmen.

3. Drahtlos-Zugangssteuerstation nach Anspruch 1,
weiterhin umfassend:
eine Kollisionsdetektoreinheit, ausgebildet zum Nachweisen (S2), dass Kommunikation des Drahtlos-Verbindungskanals gestört ist, und
einen Nachweiszähler, ausgebildet zum Zählen (S3) der Anzahl gestörter Kommunikationen, die von der Kollisionsdetektoreinheit nachgewiesen wurde,
wobei der erste Schwellenwert nach Maßgabe der Anzahl gestörter, vom Detektorzähler gezählter Kommunikationen erhöht oder vermindert wird.

4. Drahtlos-Zugangssteuerstation nach Anspruch 1,
weiterhin umfassend:
eine Kollisionsdetektoreinheit, ausgebildet zum Nachweisen (S2), dass Kommunikation des Drahtlos-Verbindungskanals gestört ist, und
einen Nachweiszähler, ausgebildet zum Zählen (S3) der Anzahl gestörter Kommunikationen, die von der Kollisionsdetektoreinheit nachgewiesen wurde,
wobei der zweite Schwellenwert nach Maßgabe der Anzahl gestörter, vom Detektorzähler gezählter Kommunikationen erhöht oder vermindert wird.

5. Drahtlos-Zugangssteuerstation nach Anspruch 1, wobei die erste Bestimmungseinheit dazu ausgebildet ist, das Bestimmen der Drahtlos-Verbindungszählung periodisch zu wiederholen.

6. Drahtlos-Zugangssteuerstation nach Anspruch 1, wobei die erste Bestimmungseinheit dazu ausgebildet ist, nach Maßgabe der Änderung des Drahtlos-Verbindungswertes des Drahtlos-Verbindungskanals die Bestimmung der Drahtlos-Verbindungszählung auszuführen.

7. Drahtlos-Zugangssteuerverfahren, umfassend:
einen Verwaltungsschritt zum Verwalten einer Zugangskategorieinformation (805), die gemäß einem Dateninhalt jedes Drahtlos-Verbindungskanals definiert ist, und von Zugangsschemainformation (804) jedes Drahtlos-Verbindungskanals, wobei die Zugangsschemainformation angibt, ob ein Drahtlos-Verbindungskanal unter Verwendung eines inhaltsfreien Zugangsschemas und/oder eines Inhalt-Zugangsschemas eingerichtet werden kann;
einen ersten Bestimmungsschritt zum Bestimmen (S11, S12) eines Drahtlos-Verbindungszählwertes, bei dem es sich um die Anzahl von Drahtlos-Verbindungskanälen handelt, die das Inhalt-Zugangsschema benutzen und eine solche Zugangskategorie aufweisen, dass ihre Prioritätsreihenfolge geringer als eine vorbestimmte Prioritätsreihenfolge ist;
einen zweiten Bestimmungsschritt zum Bestimmen einer Prioritätsreihenfolge des Drahtlos-Verbindungskanals gemäß der Zugangskategorieinformation und der Zugangsschemainformation, die im Verwaltungsschritt verwaltet wird;
einen Auswahlschritt zum Auswählen (S13, S14, S15, S16) eines Drahtlos-Verbindungskanals, dessen Zugangsschema zu ändern ist, aus mehreren Drahtlos-Verbindungskanälen mit einer Zugangskategorie, deren Prioritätsreihenfolge höher ist als die vorbestimmte Prioritätsreihenfolge, und in der Lage ist, das inhaltsfreie Zugangsschema oder das Inhalt-Zugangsschema zu verwenden; und
einen Umschaltschritt (S14, S16) zum Umschalten des Zugangsschemas des im Auswahlschritt ausgewählten Drahtlos-Verbindungskanals vom inhaltsfreien Zugangsschema ins Inhalt-Zugangsschema, oder vom Inhalt-Zugangsschema ins inhaltsfreie Zugangsschema;
wobei der Auswahlschritt dazu dient, einen Drahtlos-Verbindungskanal mit der geringsten Prioritätsreihenfolge unter den mehreren, das inhaltsfreie Zugangsschema verwendenden Drahtlos-Verbindungskanälen auszuwählen, wenn der Drahtlos-Verbindungszählwert der vorbestimmten Zugangskategorie nicht größer ist als ein vorbestimmter erster Schwellenwert, und einen Drahtlos-Verbindungskanal mit der höchsten Prioritätsreihenfolge unter den mehreren, das Inhalt-Zugangsschema verwendenden Drahtlos-Verbindungskanälen auszuwählen, wenn der Drahtlos-Verbindungszähler der vorbestimmten Zugangskategorie nicht kleiner ist als ein vorbestimmter zweiter Schwellenwert.

8. Computerprogramm zum Veranlassen eines Computers, die Schritte des Steuerverfahrens nach Anspruch 7 auszuführen.

9. Computerlesbarer Aufzeichnungsträger, der ein Computerprogramm nach Anspruch 8 enthält.

10. Drahtlos-Kommunikationssystem mit einer Drahtlos-Zugangssteuerstation nach einem der Ansprüche 1 bis 6.

## Revendications

1. Station de commande d'accès sans fil comprenant :
un gestionnaire (301) conçu pour gérer une information de catégorie d'accès (805) telle que définie conformément à des contenus de données de chaque canal de connexion sans fil, et une information de technique d'accès de chaque canal de connexion sans fil, dans lequel l'information de technique d'accès indique si un canal de connexion sans fil peut être établi en utilisant une technique d'accès sans conflit et/ou une technique d'accès avec conflit ;
une première unité de détermination conçue pour déterminer (S11, S12) un compte de connexions sans fil, qui est le nombre de canaux de connexion sans fil utilisant la technique d'accès avec conflit et ayant une catégorie d'accès dont la priorité est inférieure à une priorité prédéterminée ;
une seconde unité de détermination conçue pour déterminer un ordre de priorité du canal de connexion sans fil en fonction de l'information de catégorie d'accès et de l'information de technique d'accès gérées par ledit gestionnaire ;
une unité de sélection conçue pour sélectionner (S13, S14, S15, S16) un canal de connexion sans fil dont la technique d'accès doit être modifiée, parmi une pluralité de canaux de connexion sans fil ayant une catégorie d'accès dont l'ordre de priorité est supérieur à l'ordre de priorité prédéterminé et qui est capable d'utiliser l'une ou l'autre de la technique d'accès sans conflit et de la technique d'accès avec conflit ;
une unité de modification (301) conçue pour faire basculer la technique d'accès du canal de connexion sans fil sélectionné par ladite unité de sélection de la technique d'accès sans conflit à la technique d'accès avec conflit ou de la technique d'accès avec conflit à la technique d'accès sans conflit ;
dans lequel ladite unité de sélection est en outre conçue pour sélectionner un canal de connexion sans fil dont l'ordre de priorité est le plus bas, parmi la pluralité de canaux de connexion sans fil utilisant la technique d'accès sans conflit, lorsque le compte de connexions sans fil de la catégorie d'accès prédéterminée n'est pas supérieur à une première valeur de seuil prédéterminée, et pour sélectionner un canal de connexion sans fil dont l'ordre de priorité est le plus élevé, parmi la pluralité de canaux de connexion sans fil utilisant la technique d'accès avec conflit, lorsque le compte de connexions sans fil de la catégorie d'accès prédéterminée n'est pas inférieur à une seconde valeur de seuil prédéterminée.

2. Station de commande d'accès sans fil selon la revendication 1, dans laquelle :
ledit gestionnaire est conçu pour gérer en outre une information de largeur de bande indiquant une largeur de bande de communication exigée pour la connexion sans fil, et
ladite seconde unité de détermination est en outre conçue pour déterminer l'ordre de priorité du canal de connexion sans fil en fonction de l'information de catégorie d'accès, de l'information de technique d'accès et de l'information de largeur de bande.

3. Station de commande d'accès sans fil selon la revendication 1, comprenant en outre :
une unité de détection de collisions conçue pour détecter (S2) le fait qu'une communication du canal de connexion sans fil est perturbée, et
un compteur de détection conçu pour compter (S3) le nombre de communications perturbées détectées par ladite unité de détection de collisions,
la première valeur de seuil étant incrémentée ou décrémentée d'une unité en fonction du nombre de communications perturbées comptées par ledit compteur de détection.

4. Station de commande d'accès sans fil selon la revendication 1, comprenant en outre :
une unité de détection de collisions conçue pour détecter (S2) le fait qu'une communication du canal de connexion sans fil est perturbée, et
un compteur de détection conçu pour compter (S3) le nombre de communications perturbées détectées par ladite unité de détection de collisions,
la seconde valeur de seuil étant incrémentée ou décrémentée d'une unité en fonction du nombre de communications perturbées comptées par ledit compteur de détection.

5. Station de commande d'accès sans fil selon la revendication 1, dans laquelle ladite première unité de détermination est conçue pour répéter périodiquement la détermination du compte de connexions sans fil.

6. Station de commande d'accès sans fil selon la revendication 1, dans laquelle ladite première unité de détermination est conçue pour effectuer, en fonction de la variation du compte de connexions sans fil du canal de connexion sans fil, une détermination du compte de connexions sans fil.

7. Procédé de commande d'accès sans fil, comprenant :
une étape de gestion consistant à gérer une information de catégorie d'accès (805) telle que définie conformément à des contenus de données de chaque canal de connexion sans fil, et une information de technique d'accès (804) de chaque canal de connexion sans fil, dans lequel l'information de technique d'accès indique si un canal de connexion sans fil peut être établi en utilisant une technique d'accès sans conflit et/ou une technique d'accès avec conflit ;
une première étape de détermination consistant à déterminer (S11, S12) un compte de connexions sans fil, qui est le nombre de canaux de connexion sans fil utilisant la technique d'accès avec conflit et ayant une catégorie d'accès dont l'ordre de priorité est inférieur à un ordre de priorité prédéterminé ;
une seconde étape de détermination consistant à déterminer un ordre de priorité du canal de connexion sans fil en fonction de l'information de catégorie d'accès et de l'information de technique d'accès gérées lors de ladite étape de gestion ;
une étape de sélection consistant à sélectionner (S13, S14, S15, S16) un canal de connexion sans fil dont la technique d'accès doit être modifiée, parmi une pluralité de canaux de connexion sans fil ayant une catégorie d'accès dont l'ordre de priorité est supérieur à l'ordre de priorité prédéterminé et utilisant l'une ou l'autre de la technique d'accès sans conflit et de la technique d'accès avec conflit ;
une étape de basculement (S14, S16) consistant à faire basculer la technique d'accès du canal de connexion sans fil sélectionné lors de ladite étape de sélection de la technique d'accès sans conflit à la technique d'accès avec conflit ou de la technique d'accès avec conflit à la technique d'accès sans conflit ;
dans lequel ladite étape de sélection sélectionne un canal de connexion sans fil dont l'ordre de priorité est le plus bas, parmi la pluralité de canaux de connexion sans fil utilisant la technique d'accès sans conflit, lorsque le compte de connexions sans fil de la catégorie d'accès prédéterminée n'est pas supérieur à une première valeur de seuil prédéterminée, et sélectionne un canal de connexion sans fil dont l'ordre de priorité est le plus élevé, parmi la pluralité de canaux de connexion sans fil utilisant la technique d'accès avec conflit, lorsque le compte de connexions sans fil de la catégorie d'accès prédéterminée n'est pas inférieur à une seconde valeur de seuil prédéterminée.

8. Programme informatique apte à amener un ordinateur à exécuter les étapes du procédé de commande de la revendication 7.

9. Support d'enregistrement lisible par ordinateur enregistrant un programme informatique défini à la revendication 8.

10. Système de communication sans fil comprenant une station de commande d'accès sans fil définie dans l'une quelconque des revendications 1 à 6.
